(19) Europäisches Patentamt
European Patent Office
Office européen des brevets

(11) **EP 0 566 961 B1**

(12) **EUROPÄISCHE PATENTSCHRIFT**

(45) Veröffentlichungstag und Bekanntmachung des Hinweises auf die Patenterteilung:
**17.03.1999 Patentblatt 1999/11**

(51) Int Cl.$^6$: **H04L 12/56**

(21) Anmeldenummer: **93105980.2**

(22) Anmeldetag: **13.04.1993**

(54) **Verfahren und Schaltungsanordnung zum Überprüfen der Einhaltung vorgegebener Übertragungsbitraten in einer ATM- Vermittlungseinrichtung**

Method and circuit to enforce the preassigned transmission rate in an ATM switching equipment

Procédé et circuit pour faire respecter le débit de transmission préaccordé dans un dispositif de commutation ATM

(84) Benannte Vertragsstaaten:
**AT BE CH DE FR GB IT LI NL SE**

(30) Priorität: **23.04.1992 DE 4213431**

(43) Veröffentlichungstag der Anmeldung:
**27.10.1993 Patentblatt 1993/43**

(73) Patentinhaber: **SIEMENS AKTIENGESELLSCHAFT 80333 München (DE)**

(72) Erfinder:
• **Fogler, Andreas, Dipl.-Phys. W-8000 München 60 (DE)**
• **von Soosten, Oliver, Dipl.-Ing. W-8000 München 70 (DE)**

(56) Entgegenhaltungen:
**EP-A- 0 403 995       EP-A- 0 481 507
US-A- 4 939 723**

• **IEEE COMMUNICATIONS MAGAZINE Bd. 29, Nr. 9, September 1991, PISCATAWAY, NJ US**
• **Seiten 64 - 70 A.E. ECKBERG ET AL. 'Controlling congestion in B-ISDN/ATM: Issues and Strategies' ***

**Beschreibung**

Die Erfindung betrifft ein Verfahren und eine Schaltungsanordnung zum Überprüfen der Einhaltung vorgegebener Übertragungsbitraten gemäß Oberbegriff des Patentanspruchs 1 bzw. des Patentanspruchs 4.

Ein derartiges, auch als "Leaky-Bucket"-Verfahren bezeichnetes Verfahren ist bereits aus der EP 0 381 275 bekannt. Dabei ist dieser Druckschrift lediglich entnehmbar, daß bei der Bildung des variablen Zählwertes für die Dekrementierung der momentanen Zählerstände der einzelnen Zähleinrichtungen als Proportionalitätsfaktor ein konstanter Wert benutzt wird, der beispielsweise einer Potenz von 2 entspricht. Nicht angegeben ist dagegen, wie ein solcher Proportionalitätsfaktor für die einzelnen virtuellen Verbindungen tatsächlich festzulegen ist.

Es ist nun Aufgabe der vorliegenden Erfindung, einen Weg zu zeigen, wie ein Verfahren und eine Schaltungsanordnung der eingangs genannten Art ausgebildet werden können, um die Einhaltung vorgegebener Übertragungsbitraten für die einzelnen virtuellen Verbindungen bei einer ausreichenden Genauigkeit mit einem geringen Steuerungs- bzw. Schaltungsaufwand überprüfen zu können.

Gelöst wird diese Aufgabe bei einem Verfahren der eingangs genannten Art durch die im Patentanspruch 1 angegebenen Verfahrensmerkmale. Die Erfindung bringt dabei den Vorteil mit sich, daß durch die Festlegung der Bitratenklassen ein linearer Zusammenhang zwischen diesen Bitratenklassen und den für virtuelle Verbindungen vorgebbaren Übertragungsbitraten besteht und somit für jede der virtuellen Verbindungen in einfacher Weise ein verbindungsindividueller Proportionalitätsfaktor im Zuge des jeweiligen Verbindungsaufbaus ermittelt werden kann. Die Genauigkeit der Zuordnung einer Übertragungsbitrate zu einer Bitratenklasse ist dabei durch den der höchsten der Bitratenklassen zugeordneten normierten Zahlenwert vorgegeben. Nach einer solchen Zuordnung sind dann sämtliche Aktualisierungen der momentanen Zählerstände der einzelnen Zähleinrichtungen exakt ohne Rundungsfehler durchführbar.

Zweckmäßige Ausgestaltungen des Verfahrens gemäß der vorliegenden Erfindung ergeben sich aus den Patentansprüchen 2 und 3. Der Vorteil besteht dabei darin, daß einerseits durch die periodisch wiederholt durchgeführte Korrektur der momentanen Zählerstände der einzelnen Zähleinrichtungen und der als Bezugswerte festgelegten Zeitangaben auch für den Fall, daß über einen längeren Zeitraum keine Nachrichtenzellen im Zuge einer virtuellen Verbindung auftreten, die für die jeweilige virtuelle Verbindung in Frage kommende Zähleinrichtung fehlerfrei aktualisiert und damit die Überwachung der jeweiligen Übertragungsbitrate fehlerfrei durchgeführt werden kann und daß andererseits durch das bei Auftreten einer Nachrichtenzelle durchgeführte Aktualisieren der in Frage kommenden Zähleinrichtung und gleichzeitige Korrigieren einer der übrigen Zähleinrichtungen ein gesonderter, sämtliche Zähleinrichtungen einbeziehender Korrekturzyklus vermieden wird. Ein weiterer Vorteil besteht darin, daß die Korrektur der momentanen Zählerstande der Zähleinrichtungen in der gleichen Weise durchgeführt wird wie das Dekrementieren dieser momentanen Zählerstände bei der normalen Aktualisierung.

Die vorstehend genannte Aufgabe wird bei einer Schaltungsanordnung der eingangs genannten Art durch die im Patentanspruch 4 angegebenen schaltungstechnischen Merkmale gelöst. Der Vorteil besteht dabei in dem besonders geringen schaltungstechnischen Aufwand für die Realisierung der einem Zubringermedium zugeordneten Zähleinrichtungen. Zweckmäßige Ausgestaltungen der Schaltungsanordnung gemäß der vorliegenden Erfindung ergeben sich aus den Patentansprüchen 5 bis 7.

Im folgenden wird nun die vorliegende Erfindung anhand von Zeichnungen beispielsweise näher erläutert.

FIG 1 zeigt ein Blockschaltbild einer ATM-Vermittlungseinrichtung, bei der die Erfindung angewandt ist, und
FIG 2 zeigt einen möglichen Aufbau der in FIG 1 lediglich schematisch dargestellten Behandlungseinrichtungen.

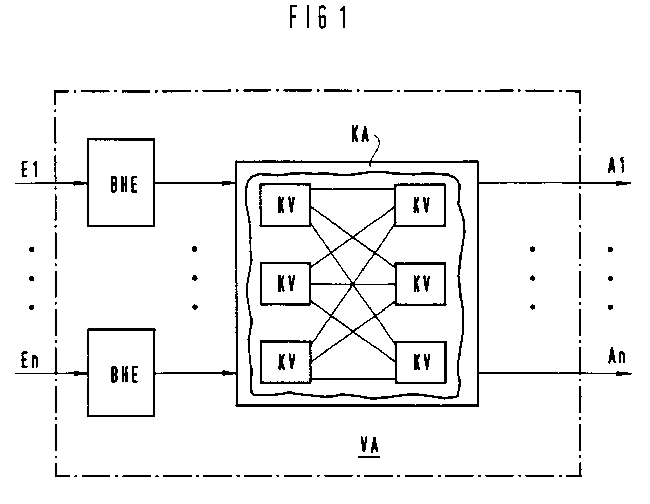

In FIG 1 ist eine für einen asynchronen Transfermodus (ATM) ausgelegte Vermittlungseinrichtung VA schematisch dargestellt, an welche eine Mehrzahl von Zubringermedien EI bis En sowie eine Mehrzahl von Abnehmermedien AI bis An angeschlossen sind. Von diesen sind in FIG 1 lediglich die Zubringermedien EI und En und die Abnehmermedien AI und An angegeben. Bei diesen Medien kann es sich beispielsweise um Teilnehmeranschlußleitungen oder um Amtsverbindungsleitungen handeln. Im folgenden werden die Zubringermedien und Abnehmermedien als Zubringerleitungen bzw. Abnehmerleitungen bezeichnet.

Auf den Zubringerleitungen und Abnehmerleitungen erfolgt jeweils eine Übertragung von Nachrichtenzellen im Zuge von virtuellen Verbindungen nach einem asynchronen Übertragungsverfahren ("asynchronous transfer mode"). Bei den Nachrichtenzellen möge es sich dabei um Zellen fester Länge handeln, welche jeweils über einen Zellenkopf, in welchem u.a. eine die jeweilige virtuelle Verbindung bezeichnende virtuelle Kanalnummer VCI bzw. VPI/VCI enthalten ist, sowie über einen Informationsteil verfügen.

In dem Informationsteil erfolgt dabei die Übertragung der eigentlichen Nachrichtensignale. Unter Nachrichtensignalen sollen dabei Daten- und Textsignale sowie Sprach- bzw. Bildsignale in digitaler Form verstanden werden. Im übrigen sei darauf hingewiesen, daß auf den Zubringer- und Abnehmerleitungen in Übertragungspausen von Nachrichtenzellen fortlaufend sogenannte Leerzellen übertragen werden, die innerhalb der Vermittlungseinrichtung nicht weitergeleitet werden.

Wie aus FIG 1 hervorgeht, ist jeder der Zubringerleitungen El bis En eine gesonderte Behandlungseinrichtung BHE zugeordnet. Eine solche Behandlungseinrichtung, auf deren Aufbau im folgenden noch näher eingegangen wird, nimmt die im Zuge von virtuellen Verbindungen über die zugeordnete Zubringerleitung übertragenen Nachrichtenzellen auf und führt vor deren Weiterleitung an eine Koppelanordnung KA verbindungsindividuell eine Überprüfung der Einhaltung der für die jeweilige virtuelle Verbindung festgelegten Übertragungsbitrate durch. Für die Koppelanordnung KA ist im übrigen in FIG 1 lediglich als Beispiel ein mehrstufiger Aufbau mit einer Mehrzahl von untereinander verbundenen Koppelvielfachen KV angegeben. Es können jedoch auch beliebige ein- oder mehrstufige Koppelanordnungen benutzt sein. Da der Aufbau und die Wirkungsweise derartiger Koppelanordnungen für die Weiterleitung von Nachrichtenzellen an in FIG 1 mit Al bis An bezeichnete Abnehmerleitungen bekannt ist, wird im folgenden darauf nicht näher eingegangen.

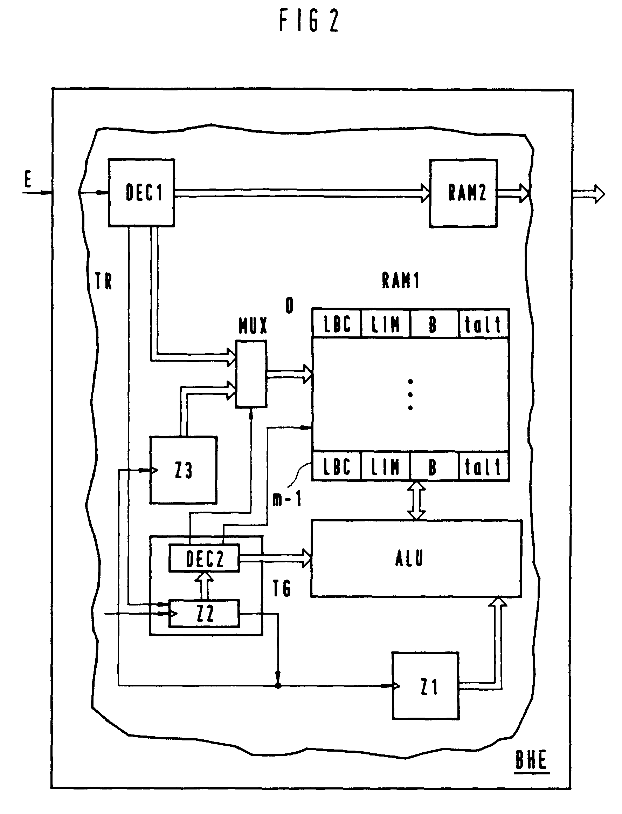

In FIG 2 ist ein möglicher Aufbau der zuvor erwähnten, in gleicher Weise aufgebauten Behandlungseinrichtungen BHE dargestellt. Dabei sind lediglich diejenigen Schaltungsteile angegeben, die für das Verständnis der vorliegenden Erfindung erforderlich sind.

Mit der jeweiligen Zubringerleitung, die in FIG 2 mit E bezeichnet ist, ist eine Decodiereinrichtung DEC1 verbunden, welche einerseits den Beginn von in serieller Form übertragenen Nachrichtenzellen erkennt und andererseits in Nachrichtenzellen jeweils auftretende Bits zu Bitgruppen mit jeweils einer festgelegten Anzahl von Bits, beispielsweise 8 Bit, zusammenfaßt und die einzelnen Bitgruppen, die im folgenden auch als Oktetts bezeichnet sind, in paralleler Form über ein Leitungssystem bereitstellt.

Dieser Decodiereinrichtung ist ein Schreib-Lese-Speicher RAM2 nachgeschaltet. Dieser wird von sämtlichen an die bereits erwähnte Koppelanordnung KA weiterzuleitenden Nachrichtenzellen durchlaufen. Die Verzögerungszeit ist dabei so festgelegt, daß vor einer Weiterleitung der gerade aufgenommenen Nachrichtenzelle an die Koppelanordnung KA durch die nachfolgend beschriebene Schaltungsanordnung eine Überprüfung der Einhaltung der für die jeweilige virtuelle Verbindung festgelegten Übertragungsbitrate durchgeführt werden kann.

Der Zellenkopf einer in den Schreib-Lese-Speicher RAM2 aufgenommenen Nachrichtenzelle wird zusätzlich durch die Decodiereinrichtung DEC1 decodiert, indem der in diesem Zellenkopf enthaltenen virtuellen Kanalnummer entsprechende Adressensignale bereitgestellt sind, die einem zweiten Schreib-Lese-Speicher RAM1 über erste Eingänge eines Multiplexers MUX zugeführt sind. Dieser Schreib-Lese-Speicher RAM1 weist für jede der auf der zugehörigen Zubringerleitung E möglichen virtuellen Verbindungen einen gesonderten Speicherbereich auf. Die einzelnen Speicherbereiche sind dabei nach Maßgabe der in den Nachrichtenzellen enthaltenen, von der Decodiereinrichtung DEC1 decodierten virtuellen Kanalnummern über den Multiplexer MUX individuell ansteuerbar. Können beispielsweise über die betreffende Zubringerleitung m mit "0" " bis "m-1" bezeichnete virtuelle Verbindungen verlaufen, so sind diesen, wie in FIG 2 angedeutet ist, mit "0" bis "m-1" bezeichnete Speicherbereiche zugeordnet. Diese sind jeweils Teil einer der jeweiligen virtuellen Verbindung individuell zugeordneten Zähleinrichtung. Die einzelnen Speicherbereiche, die jeweils in vier Speichersegmente unterteilt sind, dienen dabei für die Speicherung eines noch zu erläuternden momentanen Zählerstandes LBC der jeweiligen Zähleinrichtung, eines festgelegten maximalen Zählerstandes LIM, einer Zeitangabe t(alt) und für die Speicherung einer Angabe B bezüglich einer im folgenden noch zu erläuternden Bitratenklasse für die jeweilige virtuelle Verbindung. Diese Speicherung bzw. das Setzen des momentanen Zählerstandes LBC und der Zeitangabe t (alt) auf einen definierten Anfangswert erfolgt unter der Steuerung einer nicht dargestellten Steuereinrichtung, die dafür beispielsweise über Leitungssysteme mit dem Schreib-Lese-Speicher RAM1 verbunden ist. Sämtlichen einer Zubringerleitung zugeordneten Zähleinrichtungen ist neben einem individuellen Speicherbereich des Schreib-Lese-Speichers RAM1 eine gemeinsame, den einzelnen Zähleinrichtungen im Multiplexbetrieb zur Verfügung stehende Arithmetik-Einrichtung ALU zugehörig. Diese Arithmetik-Einrichtung steht einerseits über ein erstes Leitungssystem mit dem Schreib-Lese-Speicher RAM1 und andererseits über ein weiteres Leitungssystem mit einer als modulo-n-Zähler ausgebildeten Zählereinrichtung Z1 in Verbindung, welche der Arithmetik-Einrichtung fortlaufend sich verändernde momentane Zählerstände als noch zu erläuternde aktuelle Zeitinformationen zuführt. Weiterhin ist die Arithmetik-Einrichtung ALU über eine Steuerleitungsanordnung von einem Taktgeber TG her mit Steuersignalen für die sequentielle Durchführung von arithmetischen Operationen beaufschlagt. Ausgangsseitig steht schließlich diese Arithmetik-Einrichtung mit einem Steuereingang des zuvor beschriebenen Schreib-Lese-Speichers RAM2 in Verbindung.

Der Taktgeber TG weist eine als modulo-n-Zähler ausgebildete Zähleranordnung Z2 auf, welche einerseits von der Decodiereinrichtung DEC1 her mit jedem Auftreten eines einer Nachrichtenzelle bzw. Leerzelle zugehörigen Zellenkopfes über eine mit TR bezeichnete Steuerleitung auf einen definierten Anfangszählerstand gesetzt ist. Andererseits sind dieser Zähleranordnung von einem nicht dargestellten Taktgenerator her fortlaufend Taktimpulse zugeführt, deren Taktperiode jeweils der Dauer eines oben genannten Oktetts bei einer für die jeweilige Zubringerleitung festgelegten maximalen Übertragungsbitrate entspricht. Die Zählperiode n dieser Zähleranordnung ist entsprechend der Anzahl der in den Nachrichtenzellen bzw. Leerzellen jeweils enthaltenen Oktetts festgelegt. Mit jedem Ablauf einer solchen Zählperiode, d.h. nach der Dauer einer Nachrichtenzelle bzw. Leerzelle, gibt die Zähleranordnung Z2 an einem Überlaufausgang einen Zählimpuls ab, der der genannten Zähleranordnung Z1 und einer weiteren Zähleranordnung Z3 zugeführt wird. Darüber hinaus wird eine dem Taktgeber TG zugehörige Decodiereinrichtung DEC2 mit den momentanen Zählerständen der Zähleranordnung Z2 beaufschlagt. Diese Decodiereinrichtung gibt zu bestimmten momentanen Zählerständen der Zähleranordnung Z2 die zuvor erwähnten Steuersignale an die Arithmetik-Einrichtung ALU, Schreib- bzw. Lese-Signale an den Schreib-Lese-Speicher RAM1 sowie Umsteuersignale an den bereits erwähnten Multiplexer MUX ab, an dessen zweiten Eingängen Zählausgänge der Zähleranordnung Z3 angeschlossen sind. Diese als modulo-n-Zähler ausgebildete Zähleranordnung weist im übrigen eine Zählperiode auf, die der Anzahl der möglichen virtuellen Verbindungen auf der jeweiligen Zubringerleitung entspricht.

Nachdem zuvor der Aufbau der in FIG 3 dargestellten Behandlungseinrichtung BHE erläutert worden ist, wird nunmehr auf die Wirkungsweise einer solchen Behandlungseinrichtung näher eingegangen.

Für die Übertragung von Nachrichtenzellen im Zuge von virtuellen Verbindungen werden innerhalb der in FIG 1 dargestellten Vermittlungseinrichtung VA Bitratenklassen B für eine festgelegte minimale Übertragungsbitrate und für ganzzahlige Vielfache dieser minimalen Übertragungsbitrate definiert. Der der minimalen Übertragungsbitrate entsprechenden Bitratenklasse wird dabei ein normierter Zahlenwert 1, den übrigen Bitratenklassen dagegen jeweils ein dem in Frage kommenden ganzzahligen Vielfachen der minimalen Übertragungsbitrate entspechender normierter Zahlenwert zugeordnet. Unter der Annahme einer minimalen Übertragungsbitrate von beispielsweise 16,17 bit/s und einer maximalen Übertragungsbitrate von 135,632 Mbit/s bedeutet das also, daß die Bitratenklasse 1 einer Übertragungsbitrate von 16,17 bit/s, die Bitratenklasse 2 einer Übertragungsbitrate von 32,34 bit/s und die Bitratenklasse 8 388 560 ($2^{23}$) einer Übertragungsbitrate von 135,632 Mbit/s entspricht. Allgemein gilt bei dem gewählten Beispiel:

Bitratenklasse $n \triangleq n \times 16,17$ bit/s, mit $n = 1,2...,2^{23}$.

Im Zuge des Aufbaus einer virtuellen Verbindung über eine der in FIG 1 dargestellten Zubringerleitungen El bis En liefert die jeweilige rufende Teilnehmereinrichtung Angaben bezüglich derjenigen Übertragungsbitrate, mit der beabsichtigt ist, im Zuge der jeweiligen Verbindung Nachrichtensignale zu übertragen. Anhand dieser Angaben wird nun in einer in den FIG 1 und 2 nicht dargestellten, den Aufbau von virtuellen Verbindungen steuernden Steuereinrichtung die in Frage kommende Bitratenklasse in der gerade angegebenen Weise bestimmt. Die Bitratenklasse bzw. der dieser zugeordnete Zahlenwert wird anschließend unter Steuerung dieser Steuereinrichtung in das mit B bezeichnete Speichersegment desjenigen Speicherelementes des Schreib-Lese-Speichers RAM1 übertragen, welches der jeweiligen virtuellen Verbindung zugeordnet ist. Darüber hinaus wird in das zugehörige Speichersegment LIM ein maximal zulässiger Zählerstand, in die zugehörigen Speicherelemente LBC und t(alt) dagegen jeweils ein definierter Anfangswert, beispielsweise der Wert "0" für LBC und der aktuelle Zählerstand der Zähleranordnung Z1 für t(alt), eingetragen. Der maximal zulässige Zählerstand richtet sich dabei nach den Laufzeitschwankungen von Nachrichtenzellen auf dem Übertragungswege von der jeweiligen Teilnehmer-Übertragungseinrichtung bis zur der Vermittlungseinrichtung VA. Als Beispiel seien hier Laufzeitjitter in ATM-Multiplexern genannt.

Die gerade erläuterten Steuerungsvorgänge laufen innerhalb der Vermittlungseinrichtung VA mit jedem Aufbau einer virtuellen Verbindung ab. Wird nun der Decodiereinrichtung DEC1 (FIG 2) im Zuge einer aufgebauten virtuellen Verbindung eine Nachrichtenzelle zugeführt, so wird diese an den Schreib-Lese-Speicher RAM2 weitergeleitet und dort zunächst zwischengespeichert. Daneben wird nach Maßgabe der in dem Zellenkopf dieser Nachrichtenzelle enthaltenen virtuellen Kanalnummer von der Decodiereinrichtung DEC1 her über den Multiplexer MUX der für die jeweilige virtuelle Verbindung in Frage kommende Speicherbereich des Schreib-Lese-Speichers RAM1 für einen Lesezyklus angesteuert. Dabei wird der Speicherinhalt des angesteuerten Speicherelementes zu der Arithmetik-Einrichtung ALU hin übertragen. Diese ermittelt dann anhand dieses Speicherinhaltes einen neuen Zählerstand

$$LBC(neu) = [LBC - (B/Bmax) \Delta t]^+ + 1 \, ,$$

wobei Bmax die höchste der Bitratenklassen und $\Delta t$ die Differenz aus der von der Zähleranordnung Z1 gelieferten und der in dem genannten Speicherinhalt enthaltenen Zeitinformation t(alt) darstellen. Darüber hinaus bedeutet der Klammerausdruck [...]+, daß bei einem negativen Differenzwert dieser auf den Wert "0" gesetzt wird. Wie bereits oben erwähnt, wird dabei die Zeitinformation von der Zähleranordnung Z1 her in Form eines momentanen Zählerstandes bereitgestellt. Die Zählperiode dieser Zähleranordnung leitet sich aus der Anzahl der maximal zu überwachenden virtuellen Verbindungen auf der jeweiligen Zubringerleitung ab. Beispielsweise wird als Zählperiode n ein Mehrfaches dieser Anzahl festgelegt. Durch die von der Zähleranordnung Z2 her bereitgestellten Zählimpulse bedeutet dies also, daß nach jeweils einer Anzahl n von Nachrichtenzellen bzw. Leerzellen eine Zählperiode durchlaufen ist.

Nach der Ermittlung des momentanen Zählerstandes LBC(neu) erfolgt durch die Arithmetik-Einrichtung ALU eine Überprüfung, ob dieser aktualisierte momentane Zählerstand oberhalb des festgelegten maximalen Zählerstandes LIM liegt. Ist dies der Fall, so wird auf ein von der Arithmetik-Einrichtung ALU abgegebenes Steuersignal hin die in dem Schreib-Lese-Speicher RAM2 gerade zwischengespeicherte Nachrichtenzelle vernichtet und der aktualisierte momentane Zählerstand um den Wert 1 dekrementiert. Anderenfalls wird dagegen die betreffende Nachrichtenzelle an die Koppelanordnung KA weitergeleitet.

Nach der gerade erfolgten Überprüfung werden dann zumindest der aktualisierte momentane Zählerstand bzw. der dekrementierte momentane Zählerstand sowie der von der Zähleranordnung Z1 her als Zeitinformation gelieferte momentane Zählerstand in den gerade angesteuerten Speicherbereich des Schreib-Lese-Speichers RAM1 zurückgeschrieben, und zwar unter Überschreiben des darin bisher gespeicherten momentanen Zählerstandes LBC und der Zeitinformation t (alt). Damit ist dann der aufgrund der der Decodiereinrichtung DEC1 zugeführten Nachrichtenzelle aktivierte Steuerzyklus in der in FIG 2 dargestellten Behandlungseinrichtung BHE abgeschlossen. Ein solcher Steuer zyklus wiederholt sich dann mit jedem Auftreten einer nachfolgenden Nachrichtenzelle.

Im übrigen sei noch darauf hingewiesen, daß die Arithmetik-Einrichtung ALU nach Maßgabe der von der Decodiereinrichtung DEC2 bereitgestellten Steuersignale die zuvor erwähnten arithmetischen Operationen und die Überprüfung des aktuellen Zählerstandes hinsichtlich der Einhaltung des festgelegten maximalen Zählerstandes sequentiell in einer vorgegegebenen Reihenfolge durchführt.

Im Anschluß auf einen zuvor erläuterten, auf das Auftreten einer Nachrichtenzelle hin aktivierten Steuerzyklus läuft innerhalb der Dauer des Auftretens einer Nachrichtenzelle noch ein Korrekturzyklus ab, in welchen einer der Speicherbereiche des Schreib-Lese-Speichers RAM1 einbezogen ist. Hierzu wird der Multiplexer MUX so umgesteuert, daß nunmehr der momentane Zählerstand der Zähleranordnung Z3 dem Schreib-Lese-Speicher RAM1 als Adressensignale zugeführt ist. Der Speicherinhalt des dadurch angesteuerten Speicherbereiches wird dabei zu der Arithmetik-Einrichtung ALU hin übertragen. In dieser erfolgt dann eine Aktualisierung des momentanen Zählerstandes LBC nach Maßgabe des von der Zähleranordnung Z1 her gerade bereitgestellten momentanen Zählerstandes in der Form

$$LBC(neu) = [\, LBC - (B/Bmax)\, \Delta t\, ]^{+}.$$

Die Zeitdifferenz und der Klammerausdruck $[...]^{+}$ werden dabei in der bereits obenangegebenen Weise gebildet. Im Anschluß daran werden zumindest der aktualisierte momentane Zählerstand sowie der von der Zähleranordnung Z1 gelieferte momentane Zählerstand in den gerade angesteuerten Speicherbereich des Schreib-Lese-Speichers RAM1 zurückgeschrieben, und zwar unter Überschreiben der darin gespeicherten entsprechenden Angaben. Damit ist dann der Korrekturzyklus für den jeweiligen Speicherbereich abgeschlossen. Für den sequentiellen Ablauf dieses Korrekturzyklus werden wiederum von der Decodiereinrichtung DEC2 entsprechende Steuersignale bereitgestellt.

Dem gerade erläuterten Korrekturzyklus entsprechende Korrekturzyklen wiederholen sich mit jedem Auftreten einer Nachrichtenzelle bzw. Leerzelle in der Decodiereinrichtung DEC1. Da der momentane Zählerstand der Zähleranordnung Z3 mit jedem Auftreten einer Nachrichtenzelle bzw. Leerzelle um einen Zählschritt fortschreitet, ist nach Ablauf einer vollen Zählperiode dieser Zähleranordnung jede der Speicherzellen des Schreib-Lese-Speichers RAM1 einmal in einen Korrekturzyklus einbezogen. Durch ein solches periodisch sich wiederholendes Korrigieren der Speicherinhalte der einzelnen Speicherbereiche ist sichergestellt, daß auch bei längeren Übertragungspausen von Nachrichtenzellen im Zuge der einzelnen virtuellen Verbindungen eine fehlerfreie Aktualisierung des jeweiligen momentanen Zählerstandes in den einzelnen Speicherbereichen und damit eine fehlerfreie Überwachung auf die Einhaltung vorgegebener Übertragungsbitraten für die einzelnen virtuellen Verbindungen möglich ist.

Bei dem vorstehend beschriebenen Ausführungsbeispiel ist in dem Speichersegment B der einzelnen Speicherbereiche des Schreib-Lese-Speichers RAM1 die der jeweiligen virtuellen Verbindung zugeordnete Bitratenklasse B gespeichert. Es kann jedoch auch so vorgegangen werden, daß die jeweilige Bitratenklasse durch den Quotienten B/Bmax ersetzt ist.

Vorstehend wurde davon ausgegangen, daß für jede der virtuellen Verbindungen eine Übertragungsbitrate festgelegt ist. Dabei kann es sich bei dieser Übertragungsbitrate entweder um einen Spitzenbitratenwert oder um einen mittleren Bitratenwert handeln. Es ist jedoch auch möglich, daß für jede der virtuellen Verbindungen sowohl ein Spitzenbitratenwert als auch ein mittlerer Bitratenwert festzulegen ist. In diesem Falle können für die jeweilige virtuelle Verbindung zwei gesonderte, in der obenangegebenen Weise realisierte Speicherbereiche in dem Schreib-Lese-Speicher RAM1 reserviert sein, um für die jeweilige virtuelle Verbindung die Einhaltung der mittleren Bitrate und Spitzenbitrate getrennt überwachen zu können. Dabei ist für die beiden Bitraten gesondert die in Frage kommende Bitratenklasse zu ermitteln und ein der jeweiligen Bitratenklasse B entsprechender normierter Zahlenwert bzw. ein Quotient B/Bmax abzuspeichern. In einen während der Dauer des Auftretens einer Nachrichtenzelle bzw. Leerzelle abzuwickelnden Steuerzyklus bzw. Korrekturzyklus sind dann beide, einer virtuellen Verbindung zugeordneten Speicherbereiche des Schreib-Lese-Speichers RAM1 einzubeziehen. Dies kann sequentiell unter Einbeziehung der in FIG 2 dargestellten Arithmetik-Einrichtung ALU erfolgen. Es ist jedoch auch möglich, anstelle dieser einen Arithmetik-Einrichtung zwei parallel arbeitende Arithmetik-Einrichtungen zu benutzen.

Darüber hinaus wurde vorstehend davon ausgegangen, daß in den Zellenköpfen von Nachrichtenzellen jeweils eine virtuelle Kanalnummer VCI angegeben ist. Anstelle einer solchen virtuellen Kanalnummer kann jedoch beispielsweise eine sogenannte virtuelle Pfadnummer VPI oder eine Kombination aus VPI und VCI vorgesehen sein. Unabhängig von der Art der Kennzeichnung der einzelnen Nachrichtenzellen kann aufgrund der für die Kennzeichnung vorgesehenen Bitanzahl in dem jeweiligen Zellenkopf die Anzahl der möglichen Bitkombinationen wesentlich größer sein als die tatsächlich mögliche Anzahl m von virtuellen Verbindungen auf der jeweiligen Zubringerleitung. In diesem Falle ist es für eine Beschränkung der Anzahl der in FIG 2 dargestellten Speicherbereiche des Schreib-Lese-Speichers RAM1 auf die tatsächliche Anzahl m von virtuellen Verbindungen zweckmäßig, innerhalb der Decodiereinrichtung DEC1 eine Transformation der verwendeten Kennzeichnungen auf die m möglichen virtuellen Verbindungen und damit auf die Adressen der diesen zugeordneten Speicherbereiche 0 bis (m-1) des Schreib-Lese-Speichers RAM1 durchzuführen.

Abschließend sei noch darauf hingewiesen, daß anhand der FIG 2 lediglich ein mögliches Ausführungsbeispiel für eine Einrichtung zur Überprüfung der Einhaltung vorgegebener Übertragungsbitraten beschrieben worden ist. Das zuvor erläuterte Prinzip einer solchen Überprüfung ist jedoch auch mit den einzelnen virtuellen Verbindungen individuell zugeordneten Zähleranordnungen möglich, die durch einen gegenüber der FIG 2 abweichenden schaltungstechnischen Aufbau realisierbar sind.

**Patentansprüche**

1. Verfahren zum Überprüfen der Einhaltung der für eine asynchrone Übertragung von Nachrichtenzellen fester Länge im Zuge von virtuellen Verbindungen für die einzelnen virtuellen Verbindungen angegebenen Übertragungsbitraten in einer die Nachrichtenzellen über Zubringermedien aufnehmenden Vermittlungseinrichtung mit Hilfe von den virtuellen Verbindungen individuell zugeordneten Zähleinrichtungen, deren jeweiliger momentaner Zählerstand (LBC) bei Eintreffen einer der zugeordneten virtuellen Verbindung zugehörigen Nachrichtenzelle für eine Aktualisierung sowohl um einen konstanten Zählwert inkrementiert und als auch um einen variablen Zählwert dekrementiert wird, welcher proportional zu der Zeitdifferenz ( Δt) zwischen dem Zeitpunkt des Eintreffens der jeweiligen Nachrichtenzelle und dem als Bezugszeitpunkt dienenden, für die jeweilige Zähleinrichtung festgehaltenen Zeitpunkt des Eintreffens der zuletzt empfangenen Nachrichtenzelle derselben virtuellen Verbindung ist, wobei für die einzelnen Zähleinrichtungen jeweils individuell ein Überschreiten eines maximal zulässigen Zählerstandes (LIM) durch den aktualisierten momentanen Zählerstand der jeweiligen Zähleinrichtung als Kriterium für ein Überschreiten der für die jeweilige virtuelle Verbindung angegebenen Übertragungsbitrate überwacht wird, **dadurch gekennzeichnet,**

daß für eine festgelegte minimale Übertragungsbitrate und für deren ganzzahlige Vielfache jeweils eine gesonderte Bitratenklasse (B) definiert wird,
daß der der minimalen Übertragungsbitrate entsprechenden Bitratenklasse ein normierter Zahlenwert 1, den übrigen Bitratenklassen dagegen jeweils ein dem in Frage kommenden ganzzahligen Vielfachen der minimalen Übertragungsbitrate entsprechender normierter Zahlenwert zugeordnet wird, daß jede der virtuellen Verbindungen nach Maßgabe der dafür jeweils angegebenen Übertragungsbitrate einer der Bitratenklassen zugeordnet wird
und daß für die Dauer des Bestehens der jeweiligen virtuellen Verbindung für die Ermittlung des genannten variablen Zählwertes ein verbindungsindividueller Proportionalitätsfaktor (B/Bmax) herangezogen wird, der dem Verhältnis des der in Frage kommenden Bitratenklasse zugeordneten normierten Zahlenwertes zu dem der höchsten der Bitratenklassen zugeordneten normierten Zahlenwert entspricht.

2. Verfahren nach Anspruch 1,
**dadurch gekennzeichnet,**

daß die mit dem verbindungsindividuellen Proportionalitätsfaktor zu bewertende Zeitdifferenz aus zu den genannten Zeitpunkten vorliegenden Momentanwerten einer Zeitvariablen bestimmt wird, deren Momentanwert sich innerhalb eines periodisch wiederholt ablaufenden Zählzyklus nach jeweils einem festgelegten Zeitintervall um einen Zählschritt verändert, daß als Zeitintervall maximal die Übertragungsdauer einer Nachrichtenzelle gewählt wird
und daß zusätzlich zu der auf das Eintreffen von Nachrichtenzellen hin vorgenommenen Aktualisierung der Zählerstände der in Frage kommenden Zähleinrichtungen innerhalb eines Zählzyklus die momentanen Zählerstände der einzelnen Zähleinrichtungen im Zuge gesonderter Korrekturzyklen jeweils wenigstens zweimal um den in Frage kommenden variablen Zählwert dekrementiert und für die jeweilige Zähleinrichtung als neuer Bezugszeitpunkt der gerade aktuelle Momentanwert der Zählvariablen festgehalten wird.

3. Verfahren nach Anspruch 2,
**dadurch gekennzeichnet,**

daß über die Zubringermedien fortlaufend Nachrichtenzellen oder in Übertragungspausen von Nachrichtenzellen Leerzellen übertragen werden,
daß lediglich auf das Eintreffen einer Nachrichtenzelle hin der Zählerstand der der jeweiligen virtuellen Verbindung zugeordneten Zähleinrichtung aktualisiert wird und daß auf das Eintreffen einer Nachrichtenzelle oder Leerzelle hin zusätzlich ein Korrekturzyklus für eine der Zähleinrichtungen aktiviert wird.

4. Schaltungsanordnung zum Überprüfen der Einhaltung der für eine asynchrone Übertragung von Nachrichtenzellen fester Länge im Zuge von virtuellen Verbindungen für die einzelnen virtuellen Verbindungen angegebenen Übertragungsbitraten in einer die Nachrichtenzellen über Zubringermedien aufnehmenden Vermittlungseinrichtung mit den virtuellen Verbindungen individuell zugeordneten Zähleinrichtungen, welcher derart ausgebildet sind,

daß deren jeweiliger momentaner Zählerstand (LBC) bei Eintreffen einer der zugeordneten virtuellen Verbindung zugehörigen Nachrichtenzelle für eine Aktualisierung sowohl um einen konstanten Zählwert inkrementiert als auch um einen variablen Zählwert dekrementiert wird, welcher proportional zu der Zeitdifferenz ($\Delta$t) zwischen dem Zeitpunkt des Eintreffens der jeweiligen Nachrichtenzelle und dem als Bezugszeitpunkt dienenden, für die jeweilige Zähleinrichtung festgehaltenen Zeitpunkt des Eintreffens der zuletzt empfangenen Nachrichtenzelle derselben virtuellen Verbindung ist, wobei für die einzelnen Zähleinrichtung jeweils individuell ein Überschreiten eines maximal zulässigen Zählerstandes (LIM) durch den aktualisierten momentanen Zählerstand der jeweiligen Zähleinrichtung als Kriterium für ein Überschreiten der für die jeweilige virtuelle Verbindung angegebenen Übertragungsbitrate überwacht wird, zur Durchführung des Verfahrens nach Anspruch 1,

**dadurch gekennzeichnet,**

daß Steuermittel vorgesehen und derart ausgebildet sind, daß für eine festgelegte minimale Übertragungbitrate und für deren ganzzahlige Vielfache jeweils eine gesonderte Bitratenklasse (B) definiert wird,
daß der der minimalen Übertragungsbitrate entsprechenden Bitratenklasse ein normierter Zahlenwert "1", den übrigen Bitratenklassen dagegen ein dem in Frage kommenden Vielfachen der minimalen Übertragungsbitrate entsprechender normierter Zahlenwert zugeordnet wird,
daß jede der virtuellen Verbindungen nach Maßgabe der dafür jeweils angegebenen Übertragungsbitrate einer der Bitratenklassen zugeordnet wird,
und daß ein für die Dauer des Bestehens der jeweiligen virtuellen Verbindung für die Ermittlung des genannten variablen Zählwertes geltender verbindungsindividueller Proportionalitätsfaktor (B/Bmax) ermittelt wird, der dem Verhältnis des der in Frage kommenden Bitratenklasse zugeordneten normierten Zahlenwertes zu dem der höchsten der Bitratenklasse zugeordneten normierten Zahlenwert entspricht,
daß den Zubringermedien jeweils eine der maximalen Anzahl der über diese verlaufenden virtuellen Verbindungen entsprechende Anzahl von Zähleinrichtungen zugeordnet ist,
daß die Zähleinrichtungen jeweils aus einem individuellen Speicherbereich eines Schreib-Lese-Speichers (RAM1) sowie aus einer mit dem Schreib-Lese-Speicher verbundenen, sämtlichen Zählereinrichtungen gemeinsamen Arithmetik-Einrichtung (ALU) gebildet sind,
daß die einzelnen Speicherbereiche derart ausgebildet sind, daß jeweils als Speicherinhalt der momentane Zählerstand der jeweiligen Zählereinrichtung, der maximal zulässige Zählerstand, eine den Zeitpunkt des Eintreffens der letzten Nachrichtenzelle der jeweiligen virtuellen Verbindung markierende Zeitangabe sowie der für die jeweilige Bitratenklasse in Frage kommende normierte Zahlenwert bzw. verbindungsindividuelle Proportionalitätsfaktor speicherbar sind,
daß Decodiermittel (DEC1, MUX) vorgesehen und derart ausgebildet sind,
daß die einzelnen Speicherbereich bei Auftreten von Nachrichtenzellen nach Maßgabe eines in diesen jeweils enthaltenen, die jeweilige virtuelle Verbindung bezeichnenden Zellenkopfes individuell in einen Steuerzyklus einbeziehbar sind, in dessen Verlauf zunächst der Arithmetik-Einrichtung (ALU) der Speicherinhalt des jeweiligen Speicherbereiches sowie eine aktuelle Zeitangabe für die genannte Aktualisierung des momentanen Zählerstandes der jeweiligen Zähleinrichtung zugeführt sind,
daß von der Arithmetik-Einrichtung her bei Überschreiten des in dem gerade bereitgestellten Speicherinhalt enthaltenen maximal zulässigen Zählerstandes durch den gerade aktualisierten Zählerstand ein das Überschreiten der für die jeweilige virtuelle Verbindung angegebenen Übertragungsbitrate anzeigendes Meldesignal bereitgestellt und der aktualisierte Zählerstand um den konstanten Zählwert dekrementiert ist, und daß anschließend zumindest der gerade durch die Arithmetik-Einrichtung aktualisierte, gegebenenfalls um den konstanten Zählwert dekrementierte momentane Zählerstand sowie die aktuelle Zeitangabe in den jeweiligen Speicherbereich unter Überschreiben des bisher gespeicherten momentanen Zählerstandes bzw. der bisher gespeicherten Zeitangabe übertragbar sind.

5. Schaltungsanordnung nach Anspruch 4,
**dadurch gekennzeichnet,**
daß die aktuelle Zeitangabe von einer zentralen, als Modulo-n-Zähler ausgebildeten Zähleranordnung (Z1) in Form eines momentanen Zählerstandes bereitgestellt ist, deren Zählperiode n zumindest dem Zweifachen der maximalen Anzahl der über Zubringermedien jeweils verlaufenden virtuellen Verbindungen entspricht und deren momentaner Zählerstand in aufeinanderfolgenden Zeitintervallen, die jeweils der Übertragungsdauer einer Nachrichtenzelle entsprechen, jeweils um einen Zählschritt verändert ist.

6. Schaltungsanordnung nach Anspruch 5,
**dadurch gekennzeichnet,**

daß eine weitere, als Modulo-n-Zähler ausgebildete Zähleranordnung (Z3) vorgesehen ist, deren Zählperiode n der maximalen Anzahl der über das jeweilige Zubringermedium verlaufenden virtuellen Verbindungen entspricht und deren momentaner Zählerstand in den genannten aufeinanderfolgenden Zeitintervallen jeweils um einen Zählschritt verändert ist,
daß durch den fortlaufend sich ändernden momentanen Zählerstand der weiteren Zähleranordnung die Speicherbereiche des Schreib-Lese-Speichers (RAM1) nacheinander für einen gesonderten Korrekturzyklus ansteuerbar sind, daß im Verlauf eines solchen Korrekturzyklus der Speicherinhalt des gerade angesteuerten Speicherbereiches sowie von der ersten Zähleranordnung (Z1) her die aktuelle Zeitangabe der Arithmetik-Einrichtung (ALU') zugeführt sind, welche zunächst nach Maßgabe der in dem zugeführten Speicherinhalt enthaltenen Zeitangabe und der aktuellen Zeitangabe einen mit dem genannten verbindungsindividuellen Proportionalitätsfaktor bewerteten Zeitdifferenzwert bildet, um welchen der in dem gerade zugeführten Speicherinhalt ebenfalls enthaltene momentane Zählerstand für die Bildung eines korrigierten momentanen Zählerstandes dekrementiert ist,
und daß zumindest der korrigierte momentane Zählerstand sowie die aktuelle Zeitangabe in den gerade angesteuerten Speicherbereich unter Überschreiben des bisher darin gespeicherten momentanen Zählerstandes bzw. der darin bisher gespeicherten Zeitangabe übertragbar sind.

7. Schaltungsanordnung nach Anspruch 6,
**dadurch gekennzeichnet,**
daß für die Dauer des Auftretens von Nachrichtenzellen bzw. von in Übertragungspausen von Nachrichtenzellen übertragenen Leerzellen jeweils sowohl der für die jeweilige Nachrichtenzelle in Frage kommende Speicherbereich des Schreib-Lese-Speichers in einen Steuerzyklus als auch einer der Speicherbereiche des Schreib-Lese-Speichers (RAM1) in einen Korrekturzyklus einbezogen sind.

## Claims

1. Method for checking compliance with the transmission bit rates, which are specified for the individual virtual connections for asynchronous transmission of message cells of fixed length in the course of virtual connections, in a switching device (which receives the message cells via feeder media) with the aid of counting devices which are allocated individually to the virtual connections and whose respective instantaneous count (LBC) is both incremented by a constant count and is decremented by a variable count, for updating purposes, on arrival of a message cell which is associated with the allocated virtual connection, which variable count is proportional to the time difference ($\Delta t$) between the time of arrival of the respective message cell and the time of arrival (which is used as a reference time and is fixed for the respective counting device) of the last-received message cell in the same virtual connection, in which case the individual counting devices are respectively individually monitored for the updated instantaneous count of the respective counting device exceeding a maximum permissible count (LIM) as a criterion for exceeding the transmission bit rate specified for the respective virtual connection, characterized in that a separate bit rate class (B) is in each case defined for a specified minimum transmission bit rate and for its integer multiples, in that the bit rate class which corresponds to the minimum transmission bit rate is allocated a normalized numerical value 1, while, in contrast, the other bit rate classes are each allocated a normalized numerical value which corresponds to the integer multiples in question of the minimum transmission bit rate, in that each of the virtual connections is allocated to one of the bit rate classes depending on the transmission bit rate respectively specified for it, and in that, for the duration for which the respective virtual connection exists, a connection-specific proportionality factor (B/Bmax) is used for determining the said variable numerical value, which proportionality factor (B/Bmax) corresponds to the ratio of the normalized numerical value which is allocated to the bit rate class in question to the normalized numerical value which is allocated to the highest of the bit rate classes.

**2.** Method according to Claim 1, characterized in that the time difference, which is to be assessed using the connection-specific proportionality factor, between instantaneous values (which are present at the said times) of a time variable is determined whose instantaneous value is varied by one counting step after each specified time interval within a counting cycle, which is carried out periodically and repeatedly, in that the transmission duration of one message cell is chosen as a maximum for the time interval and in that, in addition to the updating (which is carried out on arrival of message cells) within one counting cycle of the counts of the counting devices in question, the instantaneous counts of the individual counting devices are in each case decremented at least twice, in the course of separate correction cycles, by the variable count in question, and the respective present instantaneous value of the counting variable is defined as the new reference time for the respective counting device.

**3.** Method according to Claim 2, characterized in that message cells are transmitted continuously via the feeder media or empty cells are transmitted in pauses in the transmission of message cells, in that the count of the counting device which is allocated to the respective virtual connection is updated only on arrival of a message cell, and in that a correction cycle for one of the counting devices is additionally activated on arrival of a message cell or empty cell.

**4.** Circuit arrangement for checking compliance with the transmission bit rates, which are specified for the individual virtual connections for asynchronous transmission of message cells of fixed length in the course of virtual connections, in a switching device (which receives the message cells via feeder media) using counting devices which are allocated individually to the virtual connections and which are designed in such a manner that their respective instantaneous count (LBC) is both incremented by a constant count and is decremented by a variable count, for updating purposes, on arrival of a message cell which is associated with the allocated virtual connection, which variable count is proportional to the time difference ($\Delta t$) between the time of arrival of the respective message cell and the time of arrival (which is used as a reference time and is fixed for the respective counting device) of the last-received message cell in the same virtual connection, in which case the individual counting devices are respectively individually monitored for the updated instantaneous count of the respective counting device exceeding a maximum permissible count (LIM) as a criterion for exceeding the transmission bit rate specified for the respective virtual connection, in order to carry out the method according to Claim 1, characterized in that control means are provided and are designed in such a manner that the bit rate class which corresponds to the minimum transmission bit rate is allocated a normalized numerical value "1", while, in contrast, the other bit rate classes are allocated a normalized numerical value which corresponds to the multiple in question of the minimum transmission bit rate, in that each of the virtual connections is allocated to one of the bit rate classes depending on the transmission bit rate respectively specified for it, and in that a connection-specific proportionality factor (B/Bmax) is determined which is valid for determining the said variable count for the duration for which the respective virtual connection exists and which corresponds to the ratio of the normalized numerical value which is associated with the bit rate class in question and the normalized numerical value which is associated with the highest bit rate class, in that the feeder media are each allocated a number of counting devices corresponding to the maximum number of virtual connections running via these media, in that the counting devices are each formed from an individual memory area in a random access memory (RAM1) and from an arithmetic and logic unit (ALU) which is connected to the random access memory and is common to all the counter devices, in that the individual memory areas are designed in such a manner that the instantaneous count of the respective counter device, the maximum permissible count, a specific time which marks the time of arrival of the last message cell of the respective virtual connection, as well as the normalized count and connection-specific proportionality factor in question for the respective bit rate class can in each case be stored as the memory contents, in that decoding means (DEC1, MUX) are provided and are designed in such a manner that the individual memory areas can be included individually in a control cycle when message cells occur, this being done on the basis of a cell header which is contained in each of these message cells and designates the respective virtual connection, in the course of which control cycle, the memory contents of the respective memory area as well as a current specified time are first of all supplied to the arithmetic and logic unit (ALU) for the said updating of the instantaneous count of the respective counting device, in that a reporting signal which indicates that the transmission bit rate specified for the respective virtual connection has been exceeded is produced, and the updated count is decremented by the constant count, by the arithmetic and logic unit, whenever the count which has just been updated exceeds the maximum permissible count contained in the memory contents being produced at that time, and in that, afterwards, at least the instantaneous count which has just been updated by the arithmetic and logic unit and has possibly been decremented by the constant count, as well as the current specified time can be transferred to the respective memory area, overwriting the previously stored instantaneous count and the previously stored specified time.

5. Circuit arrangement according to Claim 4, characterized in that the current specified time is produced in the form of an instantaneous count by a central counter arrangement (Z1) which is designed as a modulo-n counter, the counting period n of which count corresponds at least to twice the maximum number of virtual connections which in each case run via feeder media, and whose instantaneous count is in each case varied by one counting step in successive time intervals which each correspond to the transmission duration for one message cell.

6. Circuit arrangement according to Claim 5, characterized in that a further counter arrangement (Z3), designed as a modulo-n counter, is provided, whose counting period n corresponds to the maximum number of virtual connections which run via the respective feeder medium and whose instantaneous count is varied by in each case one counting step in the said successive time intervals, in that the instantaneous count (which is varied continuously) of the further counter arrangement can be used to drive the memory areas of the random access memory (RAM1) successively for a separate correction cycle, in that, in the course of such a correction cycle of the memory contents of the memory area currently being driven and of the first counter arrangement (Z1), the current specified time is supplied to the arithmetic and logical unit (ALU'), which, on the basis of the specified time contained in the memory contents which have been supplied and on the basis of the current specified time, initially forms a time difference value which is assessed using the said connection-specific proportionality factor and by which the instantaneous count likewise contained in the memory contents currently being supplied is decremented in order to form a corrected instantaneous count, and in that at least the corrected instantaneous count as well as the current specified time can be transferred to the memory area currently being driven, overwriting the instantaneous count previously stored in this area and the specified time previously stored in this area.

7. Circuit arrangement according to Claim 6, characterized in that, both for the duration for which message cells occur and for the duration for which empty cells transmitted in the pauses in the transmission of empty cells occur, not only is the memory area in question for the respective message cell in the random access memory included in a control cycle, but one of the memory areas of the random access memory (RAM1) is included in a correction cycle.

## Revendications

1. Procédé pour le contrôle du respect des débits de transmission, prescrits pour des liaisons virtuelles individuelles en vue d'une transmission asynchrone de cellules d'information de longueur constante au cours de liaisons virtuelles, dans un dispositif de commutation recevant les cellules d'information via des systèmes d'arrivée et à l'aide de dispositifs compteurs qui sont associés individuellement aux liaisons virtuelles et dont l'état de comptage momentané (LBC) respectif, à l'arrivée d'une cellule d'information appartenant à la liaison virtuelle associée et en vue d'une actualisation, est aussi bien incrémenté d'une valeur de comptage constante que décrémenté d'une valeur de comptage variable qui est proportionnelle à la différence de temps ($\Delta t$) entre l'instant de l'arrivée de la cellule d'information respective et l'instant, servant d'instant de référence et mémorisé pour le dispositif compteur respectif, de l'arrivée de la dernière cellule d'information reçue de la même liaison virtuelle, dans lequel, pour les dispositifs compteurs individuels, on contrôle à chaque fois individuellement un dépassement d'un état de comptage maximal autorisé (LIM) par l'état de comptage momentané actualisé du dispositif compteur respectif comme critère pour un dépassement du débit de transmission prescrit pour la liaison virtuelle respective,

   caractérisé par le fait que

   pour un débit de transmission minimal fixé et pour ses multiples entiers, on définit à chaque fois une classe de débits binaires (B) particulière,
   on associe à la classe de débits binaires correspondant au débit de transmission minimal une valeur numérique normée 1 et aux autres classes de débits binaires à chaque fois une valeur numérique normée correspondant au multiple entier concerné du débit de transmission minimal,
   on associe chacune des liaisons virtuelles à l'une des classes de débits binaires en fonction du débit de transmission prescrit pour la liaison virtuelle considérée
   et que, pour la durée de l'existence de la liaison virtuelle respective, on exploite pour déterminer la valeur de comptage variable mentionnée un facteur de proportionnalité (B/Bmax) qui est propre à chaque liaison et qui correspond au rapport de la valeur numérique normée, associée à la classe de débits binaires concernée, à la valeur numérique normée associée à la plus grande des classes de débits binaires.

2. Procédé selon la revendication 1,
   caractérisé par le fait que

   on détermine la différence de temps à pondérer avec le facteur de proportionnalité propre à la liaison à partir de valeurs momentanées, présentes aux instants mentionnés, d'une variable de temps dont la valeur momentanée varie d'un pas de comptage, à chaque fois après un intervalle de temps fixé, pendant un cycle de comptage se répétant périodiquement,
   on choisit comme intervalle de temps au maximum la durée de transmission d'une cellule d'information
   et, qu'en plus de l'actualisation, effectuée à l'arrivée de cellules d'information, des états de comptage des dispositifs compteurs concernés pendant un cycle de comptage, on décrémente à chaque fois les états de comptage momentanés des dispositifs compteurs individuels au cours de cycles de correction particuliers au moins deux fois de la valeur de comptage variable concernée et on mémorise pour le dispositif compteur respectif comme nouvel instant de référence la valeur momentanée justement actuelle de la variable de temps.

3. Procédé selon la revendication 2,
   caractérisé par le fait que

   on transmet en permanence via les systèmes d'arrivée des cellules d'information ou, dans des pauses de transmission entre des cellules d'information, des cellules vides,
   on actualise seulement à l'arrivée d'une cellule d'information l'état de comptage du dispositif compteur associé à la liaison virtuelle respective
   et, qu'à l'arrivée d'une cellule d'information ou d'une cellule vide, on active en plus un cycle de correction pour l'un des dispositifs compteurs.

4. Circuit pour le contrôle du respect des débits de transmission, prescrits pour des liaisons virtuelles individuelles en vue d'une transmission asynchrone de cellules d'information de longueur constante au cours de liaisons virtuelles, dans un dispositif de commutation recevant les cellules d'information via des systèmes d'arrivée et comportant des dispositifs compteurs qui sont associés individuellement aux liaisons virtuelles et qui sont conçus de telle sorte que

   leur état de comptage momentané (LBC) respectif, à l'arrivée d'une cellule d'information appartenant à la liaison virtuelle associée et en vue d'une actualisation, est aussi bien incrémenté d'une valeur de comptage constante que décrémenté d'une valeur de comptage variable qui est proportionnelle à la différence de temps ($\Delta$t) entre l'instant de l'arrivée de la cellule d'information respective et l'instant, servant d'instant de référence et mémorisé pour le dispositif compteur respectif, de l'arrivée de la dernière cellule d'information reçue de la même liaison virtuelle, dans lequel, pour les dispositifs compteurs individuels, on contrôle à chaque fois individuellement un dépassement d'un état de comptage maximal autorisé (LIM) par l'état de comptage momentané actualisé du dispositif compteur respectif comme critère pour un dépassement du débit de transmission prescrit pour la liaison virtuelle respective, pour la mise en oeuvre du procédé selon la revendication 1,

   caractérisé par le fait que

   il est prévu des moyens de commande qui sont conçus de telle sorte que
   pour un débit de transmission minimal fixé et pour ses multiples entiers, on définit à chaque fois une classe de débits binaires (B) particulière,
   on associe à la classe de débits binaires correspondant au débit de transmission minimal une valeur numérique normée "1" et aux autres classes de débits binaires à chaque fois une valeur numérique normée correspondant au multiple entier concerné du débit de transmission minimal,
   on associe chacune des liaisons virtuelles à l'urne des classes de débits binaires en fcnction du débit de transmission prescrit pour la liaison virtuelle considérée
   et, qu'on détermine un facteur de proportionnalité (B/Bmax) qui est propre à chaque liaison, qui est valable pour la durée de l'existence de la liaison virtuelle respective pour la détermination de la valeur de comptage variable mentionnée et qui correspond au rapport de la valeur numérique normée, associée à la classe de débits binaires concernée, à la valeur numérique normée associée à la plus grande des classes de débits binaires,
   on associe aux systèmes d'arrivée à chaque fois un nombre de dispositifs compteurs correspondant au nombre maximal des liaisons virtuelles passant par le système d'arrivée considéré,

les dispositifs compteurs sont formés chacun d'une zone de mémoire individuelle d'une mémoire vive (RAM1) ainsi que d'une unité arithmétique (ALU) commune à tous les dispositifs compteurs et reliée à la mémoire vive,

les zones de mémoire individuelles sont conçues de telle sorte que, à chaque fois, il peut être mémorisé comme contenu de mémoire l'état de comptage momentané du dispositif compteur respectif, l'état de comptage maximal autorisé, une indication temporelle donnant l'instant de l'arrivée de la dernière cellule d'information de la liaison virtuelle respective ainsi que la valeur numérique normée concernée pour la classe de débits binaires respective ou le facteur de proportionnalité propre à la liaison,

il est prévu des moyens de décodage (DEC1, MUX) qui sont conçus de telle sorte que

les zones de mémoire individuelles, à l'arrivée de cellules d'information et en fonction d'un entête de cellule contenu à chaque fois dans celles-ci et désignant la liaison virtuelle respective, sont inclues individuellement dans un cycle de commande au cours duquel l'unité arithmétique (ALU) reçoit d'abord le contenu de mémoire de la zone de mémoire respective ainsi qu'une indication temporelle actuelle pour l'actualisation mentionnée de l'état de comptage momentané du dispositif compteur respectif,

lorsque l'état de comptage justement actualisé dépasse l'état de comptage maximal autorisé donné par le contenu de mémoire justement reçu, l'unité arithmétique fournit un signal d'avis indiquant le dépassement du débit de transmission prescrit pour la liaison virtuelle respective et l'état de comptage actualisé est décrémenté de la valeur de comptage constante,

ensuite, au moins l'état de comptage momentané qui vient d'être actualisé par l'unité arithmétique et qui est éventuellement décrémenté de la valeur de comptage constante, ainsi que l'indication temporelle actuelle sont transférés dans la zone de mémoire respective en recouvrant par l'écriture l'état de comptage momentané mémorisé jusqu'alors et l'indication temporelle mémorisée jusqu'alors.

5. Circuit selon la revendication 4,
caractérisé par le fait que

l'indication temporelle actuelle est fournie sous la forme d'un état de comptage momentané par un dispositif compteur (Z1) central conçu comme un compteur modulo n dont la période de comptage n correspond au moins au double du nombre maximal des liaisons virtuelles passant à chaque fois par des systèmes d'arrivée et dont l'état de comptage momentané varie à chaque fois d'un pas de comptage à des intervalles de temps successifs qui correspondent chacun à la durée de transmission d'une cellule d'information.

6. Circuit selon la revendication 5,
caractérisé par le fait que

il est prévu un autre dispositif compteur (Z3) conçu comme un compteur modulo n dont la période de comptage n correspond au nombre maximal des liaisons virtuelles passant par le système d'arrivée respectif et dont l'état de comptage momentané varie à chaque fois d'un pas de comptage aux intervalles de temps successifs mentionnés,

l'état de comptage momentané variant en permanence de l'autre dispositif compteur permet d'adresser les zones de la mémoire vive (RAM1) les unes après les autres pour un cycle de correction particulier,

au cours d'un cycle de correction de ce genre, le contenu de mémoire de la zone de mémoire justement adressée ainsi que l'indication temporelle actuelle provenant du premier dispositif compteur (Z1) sont envoyés à l'unité arithmétique (ALU') qui forme d'abord en fonction de l'indication temporelle donnée par le contenu de mémoire envoyé et en fonction de l'indication temporelle actuelle une valeur de différence de temps qui est pondérée par le facteur de proportionnalité mentionné propre à la liaison virtuelle et qui sert de décrément pour l'état de comptage momentané également donné par le contenu de mémoire justement envoyé afin de former un état de comptage momentané corrigé,

et qu'au moins l'état de comptage momentané corrigé ainsi que l'indication temporelle actuelle peuvent être transférés dans la zone de mémoire justement adressée en recouvrant par l'écriture l'état de comptage momentané mémorisé jusqu'alors et l'indication temporelle mémorisée jusqu'alors.

7. Circuit selon la revendication 6,
caractérisé par le fait que,

pour la durée de l'arrivée de cellules d'information ou de cellules vides transmises dans des pauses de transmission entre des cellules d'information, la zone de mémoire, concernée par la cellule d'information respective, de la mémoire vive est inclue dans un cycle de commande et l'une des zones de la mémoire vive (RAM1) est inclue dans un cycle de correction.

FIG 1

# FIG 2